# EUROPEAN PATENT APPLICATION

(11) **EP 3 716 500 A1**
(43) Date of publication of application: **30.09.2020**
(21) Application number: 18885955.7
(22) Date of filing: 07.12.2018
(51) Int. Cl.: H04B 7/155

(54) **RESOURCE ALLOCATION METHOD AND DEVICE**

(30) Priority: 08.12.2017 CN 201711297552
(71) Applicant: Huawei Technologies Co., Ltd., Longgang District Shenzhen, Guangdong 518129 (CN)
(72) Inventor: WU, Dan, Shenzhen Guangdong 518129 (CN); CHEN, Lei, Shenzhen Guangdong 518129 (CN); QIU, Jing, Shenzhen Guangdong 518129 (CN)
(74) Representative: Thun, Clemens
(86) International application number: PCT/CN2018/119843
(87) International publication number: WO 2019/110011

(57) **Abstract**

Embodiments of this application provide a resource configuration method. The method includes: sending, by a relay node, a first message to a base station, where the first message carries information about an available symbol for backhaul transmission; and receiving, by the relay node, a second message from the base station, where the second message is used to indicate information about a symbol to be occupied by the relay node to perform backhaul transmission. The information about the available symbol includes one or more of the following: a quantity of available symbols, a number of the available symbol, a quantity of unavailable symbols, a number of an unavailable symbol, a propagation delay of a backhaul link, and a receive/transmit switching time of the first device. For backhaul transmission, the relay node may report a maximum quantity of available symbols for BH downlink transmission to the base station by using the first message. The base station sends the second message to the relay node, to configure a quantity of symbols or a number of a symbol for the relay node to perform backhaul transmission.

## Description

### TECHNICAL FIELD

The present invention relates to the field of communications technologies, and in particular, to a resource configuration method and an apparatus.

### BACKGROUND

A relay technology, in brief, is that during downlink transmission, a signal that needs to be sent by a base station to a terminal is not directly sent to the UE, but is first sent to a relay node (relay node, RN), and then forwarded by the relay node to the UE; and during uplink transmission, an uplink signal of the UE is also not directly sent to the base station, but is first sent to a relay node, and then forwarded by the relay node to the base station.

The relay node is a new node introduced in a network, and some new connection links need to be added for the relay node. In a base station cell in which a relay exists, connection links may be classified, based on different service objects of the links, into the following three types: an access (access, AC) link, a direct link, and a backhaul (backhaul, BH) link. The direct link is used for communication between a base station and a nearby terminal, the access link is used for mutual communication between a relay node and a terminal served by the relay node, and the backhaul link is used for communication between a relay node and a base station. That the relay node receives data from the base station may be considered as BH downlink transmission, and that the relay node sends data to the base station may be considered as BH uplink transmission. The BH uplink transmission and the BH downlink transmission may be collectively referred to as BH transmission. That the relay node sends data to the terminal may be considered as AC downlink transmission, and that the relay node receives data from the terminal may be considered as AC uplink transmission. The AC uplink transmission and the AC downlink transmission may be collectively referred to as AC transmission.

For the relay node, when the relay node switches from the AC downlink transmission to the BH downlink transmission, it is equivalent to switching by the relay node from sending data to receiving data. Similarly, when the relay node switches from the AC uplink transmission to the BH uplink transmission, it is equivalent to switching by the relay node from receiving data to sending data. Therefore, how to reserve time resources for the relay node to perform receive/transmit switching needs to be considered.

### SUMMARY

Embodiments of this application provide a resource configuration method and an apparatus. The method and the apparatus can adapt to a case in which available backhaul transmission resources such as different subcarrier spacings change. This improves resource utilization of backhaul transmission.

According to a first aspect, an embodiment of this application provides a resource configuration method. The method includes: sending, by a first device, a first message to a second device, where the first message carries information about an available symbol for backhaul transmission; and receiving, by the first device, a second message from the second device, where the second message is used to indicate information about a symbol to be occupied by the first device to perform backhaul transmission. The information about the available symbol includes one or more of the following: a quantity of available symbols, a number of the available symbol, a quantity of unavailable symbols, a number of an unavailable symbol, a propagation delay of a backhaul link, and a receive/transmit switching time of the first device.

In a possible implementation, the quantity of available symbols or the quantity of unavailable symbols may be determined based on a symbol time length, a propagation delay of a backhaul link, and a receive/transmit switching time of the first device. Specifically, when frame structure synchronization exists between the first device and the second device, a quantity n of unavailable symbols is n that meets *nT - Tₚ* ≥ *T*_{*Rx*/*Tx*}, and n is less than m. T represents a time length of one symbol, Tₚ represents a propagation delay for backhaul transmission, *T*_{*Rx*/*Tx*} represents the receive/transmit switching time of the first device, and m is a total quantity of symbols in a slot in which backhaul transmission is performed. The quantity of available symbols is N=m-n. When frame structure asynchronization exists between the first device and the second device, a quantity n of unavailable symbols is n that meets *nT* ≥ *T*_{*Rx*/*Tx*}, and n is less than m. T represents a time length of one symbol, *T*_{*Rx*/*Tx*} represents the receive/transmit switching time of the first device, and m is a total quantity of symbols in a slot in which backhaul transmission is performed. The quantity of available symbols is N=m-n. It should be noted that regardless of whether frame structure synchronization or asynchronization exists between the first device and the second device, there may be a plurality of n that meets a condition. n that has the smallest value in the plurality of n is referred to as a minimum quantity nₘᵢₙ of unavailable symbols. A maximum quantity of available symbols is Nₘₐₓ=m-nₘᵢₙ. When the first device sends the first message to the second device, the first message usually carries a minimum quantity of unavailable symbols or a maximum quantity of available symbols. When sending the second message to the first device, the second device may use one bit to indicate, to the first device, whether to perform backhaul transmission based on the minimum quantity of unavailable symbols or the maximum quantity of available symbols.

According to a second aspect, an embodiment of this application provides a resource configuration method. The method includes: receiving, by a second device, a first message from a first device, where the first message carries information about an available symbol for backhaul transmission; and sending, by the second device, a second message to the first device, where the second message is used to indicate information about a symbol to be occupied by the first device to perform backhaul transmission. The information about the available symbol includes one or more of the following: a quantity of available symbols, a number of the available symbol, a quantity of unavailable symbols, a number of an unavailable symbol, a propagation delay of a backhaul link, and a receive/transmit switching time of the first device.

According to a third aspect, an embodiment of this application provides a first device for configuring a resource. The first device includes: a sending unit, configured to send a first message to a second device, where the first message carries information about an available symbol for backhaul transmission; and the first device includes a first relay node, and a receiving unit, configured to receive a second message from the second device, where the second message is used to indicate information about a symbol to be occupied by the first device to perform backhaul transmission. The information about the available symbol includes one or more of the following: a quantity of available symbols, a number of the available symbol, a quantity of unavailable symbols, a number of an unavailable symbol, a propagation delay of a backhaul link, and a receive/transmit switching time of the first device.

According to a fourth aspect, an embodiment of this application provides a second device for configuring a resource. The second device includes: a receiving unit, configured to receive a first message from a first device, where the first message carries information about an available symbol for backhaul transmission; and a sending unit, configured to send a second message to the first device, where the second message is used to indicate information about a symbol to be occupied by the first device to perform backhaul transmission. The information about the available symbol includes one or more of the following: a quantity of available symbols, a number of the available symbol, a quantity of unavailable symbols, a number of an unavailable symbol, a propagation delay of a backhaul link, and a receive/transmit switching time of the first device.

According to any one of the first aspect to the fourth aspect, in a possible implementation, the quantity of available symbols or the quantity of unavailable symbols may be determined based on a symbol time length, a propagation delay of a backhaul link, and a receive/transmit switching time of the first device. Specifically, when frame structure synchronization exists between the first device and the second device, a quantity n of unavailable symbols is n that meets *nT* - *Tₚ* ≥ *T*_{*Rx*/*Tx*}, and n is less than m. T represents a time length of one symbol, Tₚ represents a propagation delay for backhaul transmission, *T*_{*Rx*/*Tx*} represents the receive/transmit switching time of the first device, and m is a total quantity of symbols in a slot in which backhaul transmission is performed. The quantity of available symbols is N=m-n. When frame structure asynchronization exists between the first device and the second device, a quantity n of unavailable symbols is n that meets *nT* ≥*T*_{*Rx*/*Tx*}, and n is less than m. T represents a time length of one symbol, *T*_{*Rx*/*Tx*} represents the receive/transmit switching time of the first device, and m is a total quantity of symbols in a slot in which backhaul transmission is performed. The quantity of available symbols is N=m-n. It should be noted that regardless of whether frame structure synchronization or asynchronization exists between the first device and the second device, there may be a plurality of n that meets a condition. n that has a smallest value in the plurality of n is referred to as a minimum quantity nₘᵢₙ of unavailable symbols. A maximum quantity of available symbols is Nₘₐₓ=m-nₘᵢₙ. When the first device sends the first message to the second device, the first message usually carries a minimum quantity of unavailable symbols or a maximum quantity of available symbols. When sending the second message to the first device, the second device may use one bit to indicate, to the first device, whether to perform backhaul transmission based on the minimum quantity of unavailable symbols or the maximum quantity of available symbols.

According to a fifth aspect, an embodiment of this application provides a resource configuration method. The method includes: generating, by a second device, a configuration message, where the configuration message carries information about a symbol, to be occupied for performing backhaul transmission, configured for a first device, and the information about the symbol to be occupied for performing backhaul transmission is obtained by the second device based on numerology information of the first device and a correspondence between numerology information and information about an available symbol for backhaul transmission; and sending, by the second device, the configuration message to the first device.

According to a sixth aspect, an embodiment of this application provides a resource configuration method. The method includes: receiving, by a first device, a configuration message from a second device, where the configuration message carries information about a symbol, to be occupied for performing backhaul transmission, configured for a first device, and the information about the symbol to be occupied for performing backhaul transmission is obtained by the second device based on numerology information of the first device and a correspondence between numerology information and information about an available symbol for backhaul transmission; and performing, by the first device, backhaul transmission based on the configuration message.

According to a seventh aspect, an embodiment of this application provides a first device. The first device includes: a receiving unit, configured to receive a configuration message from a second device, where the configuration message carries information about a symbol, to be occupied for performing backhaul transmission, configured for the first device, and the information about the symbol to be occupied for performing backhaul transmission is obtained by the second device based on numerology information of the first device and a correspondence between numerology information and information about an available symbol for backhaul transmission; and a processing unit, configured to perform backhaul transmission based on the configuration message.

According to an eighth aspect, an embodiment of this application provides a second device. The second device includes: a processing unit, configured to generate a configuration message, where the configuration message carries information about a symbol, to be occupied for performing backhaul transmission, configured for a first device, and the information about the symbol to be occupied for performing backhaul transmission is obtained by the second device based on numerology information of the first device and a correspondence between numerology information and information about an available symbol for backhaul transmission; and a sending unit, configured to send the configuration message to the first device.

In any one of the fifth aspect to the eighth aspect, the information about the symbol to be occupied for performing backhaul transmission includes a quantity of symbols or a number of a symbol for performing backhaul transmission. The numerology information includes one or more of the following parameter information: a subcarrier spacing, a cyclic prefix (cyclic prefix, CP), a time unit, a bandwidth, and the like. The information about the available symbol includes one or more of the following: a quantity of available symbols, a number of the available symbol, a quantity of unavailable symbols, a number of an unavailable symbol, a propagation delay of a backhaul link, and a receive/transmit switching time of the first device. A correspondence between the numerology information and the information about the available symbol for backhaul transmission may be predefined. The correspondence may be pre-stored in the second device and the first device. Using an example in which the numerology information is the subcarrier spacing and the information about the available symbol is the quantity of available symbols, the correspondence between the numerology information and the information about the available symbol for backhaul transmission may be shown in a predefined correspondence table between the subcarrier spacing and the quantity of available symbols. The second device may learn of the quantity of available symbols of the first device based on the predefined correspondence table and the subcarrier spacing that is configured for the first device. The second device configures, for the first device based on the quantity of available symbols, a quantity of symbols or a number of a symbol for performing backhaul transmission. Optionally, the second device may send configuration information of the subcarrier spacing to the first device, and the first device may also obtain a quantity of available symbols of the first device based on the predefined correspondence table. If the first device performs backhaul transmission based on a symbol that is determined based on the quantity of available symbols by default, the second device no longer needs to configure, for the first device, a quantity of symbols or a number of a symbol for performing backhaul transmission. In other words, the second device implicitly notifies, by using the information of the subcarrier spacing, the first device of a quantity of symbols or a number of a symbol for performing backhaul transmission.

According to any one of the fifth aspect to the eighth aspect, in a possible implementation, there may be a plurality of correspondences between the numerology information and the information about the available symbol for backhaul transmission. For example, there may be a plurality of predefined correspondence tables. The plurality of predefined correspondence tables are mainly related to information such as a propagation delay of a backhaul link. Therefore, the method further includes: receiving, by the second device, information about the backhaul link that is reported by the first device; and determining, by the second device based on the information about the backhaul link, a correspondence between the numerology information and the quantity of available symbols for backhaul transmission. For example, when the propagation delay of the backhaul link is within a range, the propagation delay corresponds to a predefined correspondence table. Therefore, the predefined correspondence table can be determined based on the propagation delay of the backhaul link.

According to any one of the fifth aspect to the eighth aspect, in a possible implementation, when the first device moves or performs connection switching, the foregoing correspondence needs to be updated. An update method includes: configuring, by the second device, a new correspondence for the first device by using signaling such as RRC signaling, a MAC layer CE, downlink control information (downlink control information, DCI), or the like. For example, the second device notifies, by using RRC signaling, a MAC layer CE, or DCI, the first device of a specific correspondence that is to be used and that is in the plurality of predefined correspondences.

According to a ninth aspect, an embodiment of the present invention provides a device. The device includes a transceiver and a processor. The memory is coupled to the processor. The transceiver receives and/or sends a message. The processor runs code in the memory, to enable the device to perform the method according to any one of the first aspect, the second aspect, the fifth aspect, or the sixth aspect.

According to a tenth aspect, an embodiment of the present invention provides a readable storage medium. The readable storage medium stores an instruction, and when the instruction stored in the readable storage medium is run on a device, the device is enabled to perform the method according to any one of the first aspect, the second aspect, the fifth aspect, or the sixth aspect.

According to an eleventh aspect, an embodiment of the present invention provides a computer program product. When the computer program product runs on a computer, the computer is enabled to perform the method according to any one of the first aspect, the second aspect, the fifth aspect, or the sixth aspect.

According to a twelfth aspect, an embodiment of the present invention provides a chip. The chip includes a communications interface and a processor. The communications interface is used for message receiving and/or sending. The processor runs code in a memory, to enable the chip to perform the method according to any one of the first aspect, the second aspect, the fifth aspect, or the sixth aspect.

In the foregoing aspects of the embodiments of this application, the second device may be a previous-hop device, an upper-level node, or an upstream node of a first device on a link from a base station to a terminal. The first device includes a first relay node, and the second device includes a base station. Alternatively, the first device includes a second relay node, and the second device includes a third relay node. The third relay node is a previous-hop device of the second relay node. Specifically, the first device may be a current-level relay node, and the second device may be an upper-level relay node of the current-level relay node. The upper-level relay node configures backhaul transmission of the current-level relay node by receiving information about an available symbol (or obtaining information about an available symbol based on a predefined correspondence) and sending information used to indicate a symbol to be occupied by the current-level relay node to perform backhaul transmission. In a multi-hop relay scenario, the method provided in the embodiments of this application may be used between the base station and the first relay node or between the upper-level relay node and the current-level relay node. Because the upper-level relay node may be a base station that performs a relay function, the upper-level relay node may configure the current-level relay node based on the received information about the available symbol.

In the resource configuration method provided in the embodiments of this application, the first device notifies the second device of the information about the available symbol, so that the second device can perform a relatively good configuration on the available symbol or an unavailable symbol. Therefore, the method can adapt to a case in which available backhaul transmission resources change when the relay node performs connection switching, the relay node moves, the relay node uses different subcarrier spacings, or the like. This improves resource utilization of backhaul transmission.

### BRIEF DESCRIPTION OF DRAWINGS

FIG. 1 is a schematic architectural diagram of a wireless communications system to which an embodiment of this application is applied;
FIG 2 is a resource configuration method according to an embodiment of this application;
FIG. 3 is a schematic diagram of a frame structure of a base station and a frame structure of a relay node in a BH downlink transmission scenario;
FIG. 4 is a schematic diagram of a frame structure of a base station and a frame structure of a relay node in a BH downlink transmission scenario;
FIG. 5 is a schematic diagram of a frame structure of a base station and a frame structure of a relay node in a BH uplink transmission scenario;
FIG. 6 is a schematic diagram of downlink transmission in which frame structure asynchronization exists between a base station and a relay node;
FIG. 7 is a schematic diagram of uplink transmission in which frame structure asynchronization exists between a base station and a relay node;
FIG. 8 is a schematic diagram of frame structures in BH downlink transmission at different subcarrier spacings;
FIG 9 is a schematic diagram of a resource configuration method according to an embodiment of this application;
FIG. 10 is a possible schematic structural diagram of a first device according to an embodiment of this application;
FIG. 11 is a possible schematic diagram of a logical structure of a first device according to an embodiment of this application;
FIG. 12 is a possible schematic structural diagram of a second device according to an embodiment of this application; and
FIG. 13 is a possible schematic diagram of a logical structure of a second device according to an embodiment of this application.

### DESCRIPTION OF EMBODIMENTS

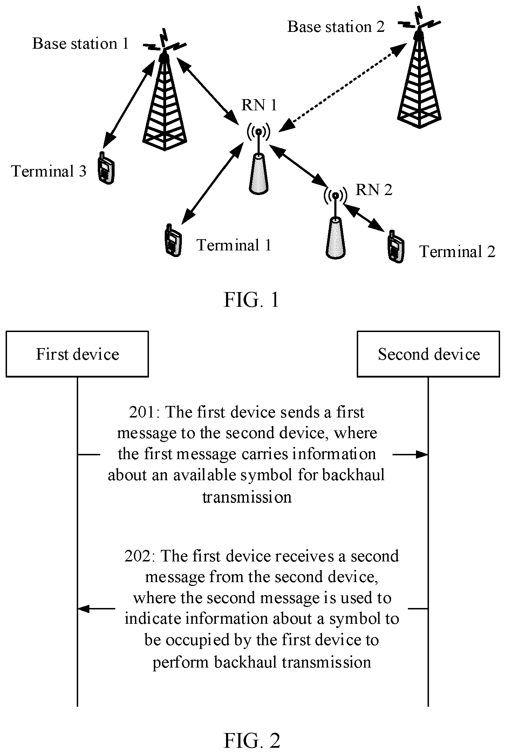

FIG. 1 is a schematic architectural diagram of a wireless communications system to which an embodiment of this application is applied. As shown in FIG. 1, the wireless communications system includes a base station, a relay node, and a terminal. The terminal may be connected to the base station in a wireless manner, and exchange data with the base station. The terminal may also be connected to the relay node in a wireless manner, and perform data transmission with the relay node. In FIG. 1, a backhaul link exists between a base station 1 and a relay node 1, an access link exists between the relay node 1 and a terminal 1, an access link exists between a relay node 2 and a terminal 2, a backhaul link directly exists between the relay node 1 and the relay node 2, and a direct link exists between the base station 1 and a terminal 3. The relay node 1 in FIG. 1 may alternatively be handed over to a base station 2. That is, the relay node 1 disconnects the backhaul link from the base station 1, and establishes a backhaul link to the base station 2. FIG. 1 is merely a schematic diagram. The communications system may further include another network device. For example, the communications system may further include more base stations, more relay nodes, and more terminals.

The base station in the embodiments of this application is an access device used by the terminal to access the wireless communications system in a wireless manner, and may be a base station, an evolved NodeB, a base station in a next-generation communications system, an access node in a Wi-Fi system, or the like. The relay node in the embodiments of this application may be a base station or a micro base station. The relay node may operate in a low frequency band or a high frequency band.

The terminal in the embodiments of this application may also be referred to as a terminal device, user equipment (user equipment, UE), a mobile station (mobile station, MS), a mobile terminal (mobile terminal, MT), or the like. The terminal may be a mobile phone (mobile phone), a tablet (Pad), a computer having a wireless transceiver function, another terminal having a wireless transceiver function, or the like.

In a next-generation communications system, a typical value of a receive/transmit switching time of a relay node, especially a high-frequency relay node, may be 8 µs, and a subcarrier spacing is 120 kHz. Therefore, a length of one symbol is approximately 8.9 µs. The symbol may be an orthogonal frequency division multiplexing (Orthogonal frequency-division multiplexing, OFDM) symbol. When frame structure asynchronization exists between the base station and the relay node, a switching time of the relay node from sending to receiving plus a switching time from receiving to sending is approximately 16 µs. This is greater than the length of one symbol, and therefore, a plurality of symbols need to be used for receive/transmit switching of the relay node. If relay node switching capabilities of different vendors are different, quantities of symbols required for switching are also different. When frame structure synchronization exists between the base station and the relay node, a propagation delay is approximately 1 µs in a scenario in which an inter-site distance (inter-site distance, ISD) is 300 m. If one symbol is reserved for receive/transmit switching, a time available to switching is approximately 8.9 µs - 1 µs = 7.9 µs. As described above, a typical value of the switching time of the relay node may be 8 µs, and therefore, one symbol may be insufficient. If the relay node is handed over from one base station to another base station, a propagation delay of a backhaul link changes. Consequently, a quantity of symbols used for receive/transmit switching may also change. As described in FIG. 1, it is assumed that at a moment t₁, the relay node 1 is connected to the base station 1, a physical distance between the base station 1 and the relay node 1 is relatively short, and a propagation delay of a backhaul link is relatively small. At a moment t₂, the relay node 1 is handed over to the base station 2, a physical distance between the base station 2 and the relay node 1 is relatively long, and a propagation delay of a backhaul link is relatively large. When the relay node 1 communicates with the base station 2, more symbols may be used for receive/transmit switching than when the relay node 1 communicates with the base station 1. It should be noted that the receive/transmit switching time in this embodiment of this application may also be referred to as a receive/transmit transition time. The receive/transmit switching time is mainly a time that needs to be reserved or idle when a network device such as a relay node or a base station performs receive/transmit switching. The receive/transmit switching time may specifically include a switching time from receiving to sending and/or a switching time from sending to receiving. Frame structure synchronization between the base station and the relay node means that when the base station and the relay node communicate with each other, frames transmitted between the base station and the relay node are aligned in a timing manner. Frame structure asynchronization between the base station and the relay node means that when the base station and the relay node communicate with each other, frames transmitted between the base station and the relay node are aligned in a timing manner.

In addition, in a next-generation communications system, there may be a plurality of types of subcarrier spacings (for example, subcarrier spacings of 15 kHz to 480 kHz), and symbol lengths corresponding to different subcarrier spacings are different. In this case, quantities of symbols that need to be reserved (or idle, which is the same below) for a same receive/transmit switching time are also different. Consequently, a quantity of symbols used for receive/transmit switching may also change.

Therefore, an embodiment of this application provides a resource configuration method. According to the method, a relay node can flexibly configure quantities of symbols used for receiving and sending, to ensure maximum utilization of a transmission resource on a backhaul link. FIG 2 is a resource configuration method according to an embodiment of this application. In the method, a second device may be a previous-hop device, an upper-level node, or an upstream node of a first device on a link from a base station to a terminal. The first device includes a first relay node, and the second device includes a base station. Alternatively, the first device includes a second relay node, and the second device includes a third relay node. The third relay node is a previous-hop device of the second relay node. Specifically, the first device may be a current-level relay node, and the second device may be an upper-level relay node of the current-level relay node. In a multi-hop relay scenario, the method provided in this embodiment of this application may be used between the base station and the first relay node or between the upper-level relay node and the current-level relay node. For example, the first device may be the relay node 1 in FIG. 1, and the second device may be the base station 1 in FIG. 1. Alternatively, the first device may be the relay node 1 in FIG. 1, and the second device may be the relay node 2 in FIG. 1. The method includes the following several steps.

Step 201: The first device sends a first message to the second device, where the first message carries information about an available symbol for backhaul transmission.

The information about the available symbol includes one or more of the following: a quantity of available symbols, a number of the available symbol, a quantity of unavailable symbols, a number of an unavailable symbol, a propagation delay of a backhaul link, and a receive/transmit switching time of the first device. The quantity of available symbols may be determined based on the quantity of unavailable symbols and a total quantity of symbols in a slot in which backhaul transmission is performed. When the total quantity of symbols in the slot in which backhaul transmission is performed is known, the quantity of available symbols is equal to a quantity obtained by subtracting the quantity of unavailable symbols from the total quantity of symbols in the slot for backhaul transmission. Similarly, the quantity of unavailable symbols may be obtained based on the quantity of available symbols. The number of the available symbol may be determined based on numbers of all symbols in a slot in which backhaul transmission is performed and the number of the unavailable symbol. The number of the unavailable symbol may be determined based on numbers of all symbols in a slot in which backhaul transmission is performed and the number of the available symbol. Certainly, the first device may alternatively report a receive/transmit switching time and a propagation delay of a backhaul link, and then the second device calculates, with reference to a symbol time length, the quantity of available symbols for backhaul transmission. Therefore, the quantity of available symbols for backhaul transmission may be determined based on the symbol time length, the propagation delay of the backhaul link, and the receive/transmit switching time of the first device. In addition, regardless of whether frame structure synchronization or asynchronization exists between the first device and the second device, there may be a plurality of quantities, of unavailable symbols or available symbols, that meet a condition. A quantity that has the smallest value in the plurality of quantities of unavailable symbols is referred to as a minimum quantity of unavailable symbols. A quantity that has the greatest value in the plurality of quantities of available symbols is referred to as a maximum quantity of available symbols.

The second device receives the first message from the first device. The second device may configure, for the first device based on the received first message, a quantity of symbols or a number of a symbol used for backhaul transmission. For example, the second device configures the first device to perform backhaul transmission on the available symbol indicated by the first message. Alternatively, the second device determines, based on a quantity of available symbols reported by the first device, a symbol that is not used for backhaul transmission. The symbol that is not used for backhaul transmission cannot be a symbol that should be used to send BH control information. In addition, when symbols that are not used for backhaul transmission are determined, impact on AC transmission should be considered as small as possible. To ensure resource utilization, a specific symbol for backhaul transmission may alternatively be determined based on a maximum quantity of available symbols. The second device may send, to the first device by using the second message, information about a symbol to be occupied by the first device to perform backhaul transmission.

In a possible implementation, the information about the available symbol is a number of the available symbol. The number of the available symbol includes a number of a start symbol of available symbols and/or a number of an end symbol of available symbols. The number may be an index (index) configured by the second device for the first device. The number of the start symbol and the number of the end symbol may be encoded to obtain a configuration bit corresponding to the number of the start symbol and the number of the end symbol. A correspondence table known to both the second device and the first device may be predefined. The first device may directly report the configuration bit when reporting the number of the available symbol. The second device may obtain the number of the available symbol based on the correspondence table. Table 1 is a correspondence table between a configuration bit and a number of a start symbol and a number of an end symbol. As shown in Table 1, when a quantity of configuration bits is 2, four types of numbers of available symbols may be configured. Certainly, a specific value of the number of the start symbol and a specific value of the number of the end symbol in Table 1 may be other values. In addition, the quantity of configuration bits may be increased to indicate more cases of the number of the start symbol and the number of the end symbol.

**Table 1 Table of a correspondence between a configuration bit and a number of a start symbol and a number of an end symbol**

| Configuration bit | Number of a start symbol | Number of an end symbol |
|---|---|---|
| 00 | 0 | 13 |
| 01 | 0 | 12 |
| 10 | 0 | 11 |
| 11 | 0 | 10 |

The first device may use radio resource control (radio resource control, RRC) signaling, a media access control (media access control, MAC) layer control element (control element, CE), uplink control signaling (uplink control information, UCI), or the like as the first message to carry the quantity of available symbols or the number of the available symbol.

Step 202: The first device receives a second message from the second device, where the second message is used to indicate information about a symbol to be occupied by the first device to perform backhaul transmission.

The information about the symbol to be occupied for performing backhaul transmission includes a quantity of symbols or a number of a symbol for performing backhaul transmission. When the information about the symbol to be occupied for performing backhaul transmission is the number of the symbol, the second device may send configuration bits similar to those in Table 1, to indicate a number of a start symbol and a number of an end symbol in symbols occupied for performing backhaul transmission. The second message may be RRC signaling, a MAC layer CE, or the like. The first device performs backhaul transmission on a corresponding symbol based on an indication of the second message.

The RRC signaling and the MAC layer CE in this embodiment of this application may be triggered by a network side or a terminal side. Usually, transmission may be performed aperiodically. Certainly, transmission may alternatively be performed periodically.

The following further describes the resource configuration method in detail by using embodiments. In the following specific embodiments, an example in which the first device is a first relay node and the second device is a base station is used for description. For a case in which the first device is a second relay node, and the second device is a third relay node, a description may be obtained similarly, and is not described. In addition, for brevity of description, the first relay node is referred to as a relay node in a specific embodiment. Generally, to maximize resource utilization, a first message sent by the relay node to the base station carries a maximum quantity of available symbols. Therefore, the following embodiment is mainly described by using the information about the available symbol that is the maximum quantity of available symbols, and other information about the available symbol may be obtained in a similar manner. Therefore, details are not described again.

In a scenario in which frame structure synchronization exists between the base station and the relay node, for BH downlink transmission, the relay node may report a maximum quantity of available symbols for BH downlink transmission to the base station by using a first message. The base station sends the second message to the relay node, to configure a quantity of symbols or a number of a symbol for the relay node to perform BH downlink transmission.

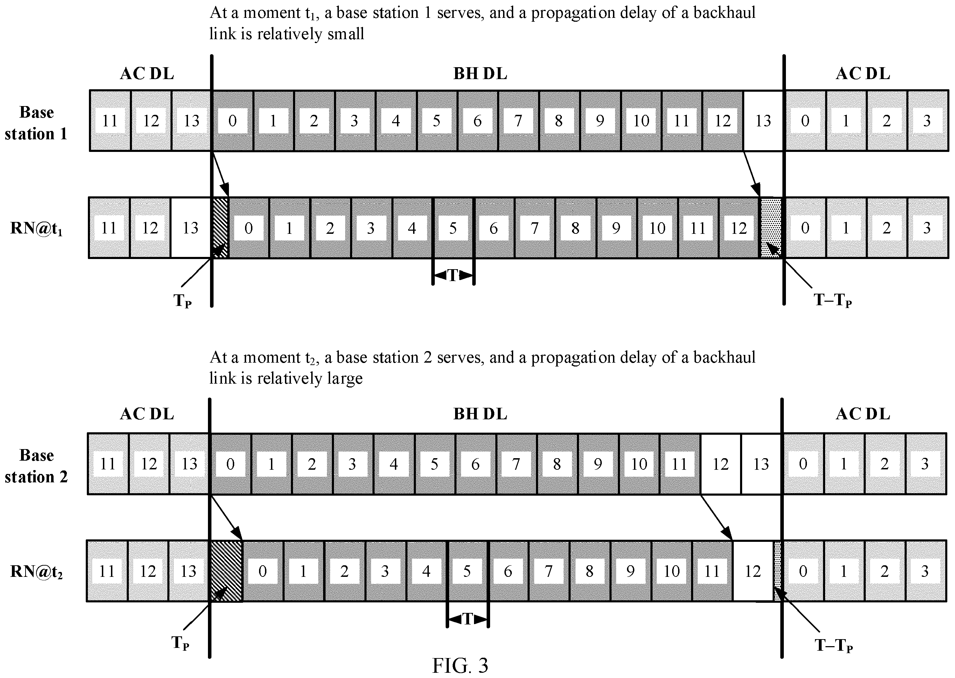

FIG. 3 is a schematic diagram of a frame structure of a base station and a frame structure of a relay node in a BH downlink transmission scenario. As shown in FIG. 3, "AC DL" and "BH DL" respectively indicate AC downlink transmission and BH downlink transmission. In FIG. 3, a small square represents a symbol. A number in the small square represents a number of the symbol in a slot in which the symbol is located. In FIG. 3, there are three connected slots, and each slot has 14 symbols. There may be more symbols or fewer symbols in each slot. This is not limited in this application. In addition, for simplicity, there are only downlink symbols in a slot of BH downlink transmission. During specific implementation, an uplink symbol and/or a downlink symbol may be dynamically configured in one slot. When there are both an uplink symbol and a downlink symbol in one slot, a time resource used for receive/transmit switching may be reserved by using the resource configuration method provided in this application. The slot in this embodiment of this application may alternatively be understood as a segment of time resources. A slot for backhaul transmission or a slot in which backhaul transmission is performed is a segment of time resources used for backhaul transmission.

In three slots in FIG. 3, the relay node performs AC downlink transmission in the first slot and the third slot, and performs BH downlink transmission in the second slot. Therefore, a receive/transmit switching time needs to be reserved between the first slot and the second slot and between the second slot and the third slot.

In FIG. 3, T represents a time length of one symbol, and Tₚ represents a propagation delay of BH downlink transmission. It is assumed that at a moment t₁, a base station connected to the relay node is a base station 1. In this case, a propagation delay is relatively small. If a time T-Tp is sufficient for receive/transmit switching of the relay node, the relay node needs to reserve only the last symbol when performing BH downlink transmission. It is assumed that at a moment t₂, the relay node is handed over to connect to a base station 2. In this case, a propagation delay is relatively long, and T-Tₚ is insufficient for receive/transmit switching of the relay node. Therefore, two symbols need to be reserved for BH downlink transmission, to ensure that 2T-Tₚ is sufficient for receive/transmit switching of the relay node. The rest may be deduced by analogy.

Specifically, after completing initial access or being handed over from one base station to another base station, the relay node reports a maximum quantity of available symbols or a number of an available symbol for BH downlink transmission. The maximum quantity of available symbols may be determined by using the following method. It is assumed that a total quantity of symbols in a slot in which BH downlink transmission is performed is m, a receive/transmit switching time of the relay node is *T*_{*Rx*/*Tx*}, and n that has the smallest value and that meets *nT - Tₚ* ≥ *T*_{*Rx*/*Tx*} is a quantity of symbols that need to be reserved. For BH downlink transmission, the base station usually configures the relay node to reserve a symbol at the tail of a slot in which BH downlink transmission is performed. m-n is a maximum quantity of available symbols in the slot. It should be noted that if Tₚ is insufficient to be used for receive/transmit switching of the relay node, the first symbol for BH downlink transmission or the last symbol of a previous slot may be reserved. For example, the last symbol of the relay node in the first slot at the moment t₁ in FIG. 3 may be reserved for receive/transmit switching.

It should be noted that the base station may measure an uplink timing advance (time advance, TA) of a backhaul link, where TA = a propagation delay of BH downlink transmission + a propagation delay of BH uplink transmission. If reciprocity does not exist between an uplink channel and a downlink channel, the base station cannot accurately learn of the propagation delay of BH downlink transmission and the propagation delay of BH uplink transmission. In addition, the base station does not know a receive/transmit switching time of the relay node, and therefore, the base station cannot obtain an accurate quantity of available symbols. However, the relay node calculates the propagation delay of BH downlink transmission based on downlink synchronization and timing that is in an entire network, and then in combination with the receive/transmit switching time of the relay node, obtains a quantity of symbols that need to be reserved (or idle). Therefore, reporting by the relay node is the best choice.

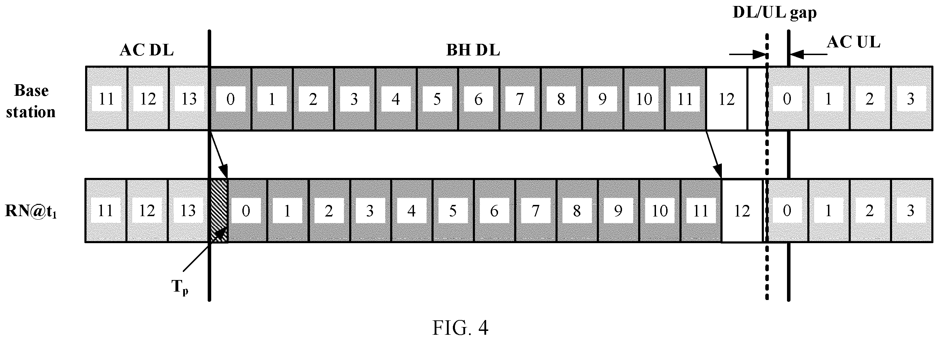

FIG. 4 is a schematic diagram of a frame structure of a base station and a frame structure of a relay node in a BH downlink transmission scenario. As shown in FIG. 4, BH downlink transmission is followed by AC uplink transmission. "DL/UL gap" represents a timing advance of uplink transmission relative to downlink transmission. For example, the DL/UL gap may be considered as a timing advance of a slot for performing AC uplink transmission in FIG. 4 relative to the third slot in FIG. 3 (the slot is used for performing AC downlink transmission). Because the timing advance "DL/UL gap" occupies some of several symbols reserved by the base station in FIG. 3, a remaining time resource may be insufficient for transmit/receive switching of the base station. Therefore, the base station needs to determine whether the remaining time resource is sufficient for completing receive/transmit switching or transmit/receive switching of the base station. If the remaining time resource is insufficient for completing receive/transmit switching or transmit/receive switching of the base station, one or more additional BH downlink transmission symbols or AC uplink transmission symbols need to be reserved. For example, in FIG. 4, a symbol 12 that is for BH downlink transmission is also reserved for receive/transmit switching.

In a scenario in which frame structure synchronization exists between the base station and the relay node, for BH uplink transmission, the relay node may report a maximum quantity of available symbols for BH uplink transmission to the base station by using a first message. The base station sends a second message to the relay node, to configure a quantity of symbols or a number of a symbol for the relay node to perform BH uplink transmission.

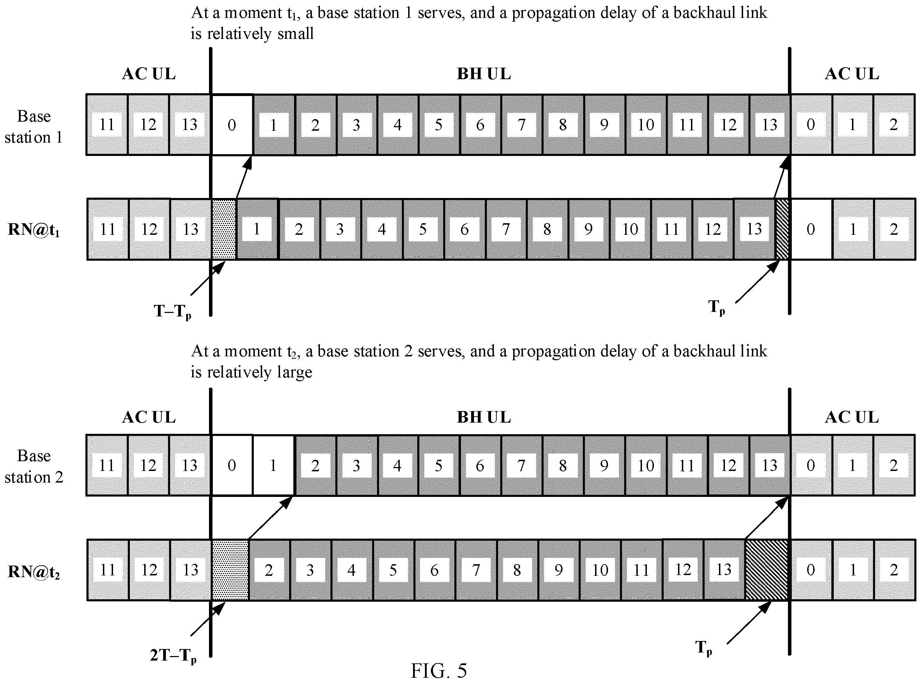

FIG. 5 is a schematic diagram of a frame structure of a base station and a frame structure of a relay node in a BH uplink transmission scenario. As shown in FIG. 5, "AC UL" and "BH UL" respectively indicate AC uplink transmission and BH uplink transmission. A method for determining a maximum quantity of available symbols for BH uplink transmission is similar to that for BH downlink transmission. Note that for BH uplink transmission, the base station usually configures the relay node to reserve a symbol at the head of a slot in which BH uplink transmission is performed. The reason is that a symbol at the tail of the slot in which BH uplink transmission is performed is usually used to send an uplink control channel or an uplink reference signal, and it is better to ensure that the symbol can be used for normal transmission. It is a relatively good choice to reserve the symbol at the head of the slot in which BH uplink transmission is performed. In addition, a number of a symbol for the relay node is usually based on a number of the base station. Therefore, a number of a symbol that is for the relay node and that is punctured and a number of a symbol that is for the relay node and that is for actual transmission are also determined according to a numbering rule of the base station.

In a scenario in which frame structure asynchronization exists between the base station and the relay node, the relay node may report a maximum quantity of available symbols for backhaul transmission to the base station by using a first message. The base station sends a second message to the relay node, to configure a quantity of symbols or a number of a symbol for the relay node to perform backhaul transmission. The maximum quantity of available symbols for backhaul transmission may be determined by using the following method. Regardless of BH uplink transmission or BH downlink transmission, it is assumed that a receive/transmit switching time of the relay node is *T*_{*Rx*/*Tx*}, and the receive/transmit switching time may specifically include a receive/transmit switching time *T_{Rx→Tx}* and a transmit/receive switching time *T_{Tx→Rx}*. n that has the smallest value and that meets *nT* ≥ *T*_{*Rx*/*Tx*} is the quantity of symbols to be reserved, and m-n is a maximum quantity of available symbols in the slot. It should be noted that a location or a number of a reserved symbol is determined based on an asynchronous timing relationship between the base station and the relay node and a receive/transmit switching time of the relay node, and may include several symbols at a head and/or a tail of a slot in which backhaul transmission is performed. In addition, for a case in which the relay node only performs receive/transmit switching, n may still be obtained based on *nT* ≥ *T_{Rx→Tx}*. In this case, *T_{Tx→Rx}* may be considered as zero. For a case in which the relay node performs only transmit/receive switching, n may still be obtained based on *nT* ≥ *T_{Tx→Rx}*. In this case, *T_{Rx→Tx}* may be considered as zero. After receiving the maximum quantity of available symbols reported by the relay node, the base station needs to determine whether the reserved symbol can meet a requirement of receive/transmit switching of the base station (similar to the case in FIG. 4). If the reserved symbol does not meet the requirement of receive/transmit switching of the base station, one or more additional BH or AC symbols need to be additionally reserved, and then a quantity of available symbols or a number of an available symbol for backhaul transmission is determined.

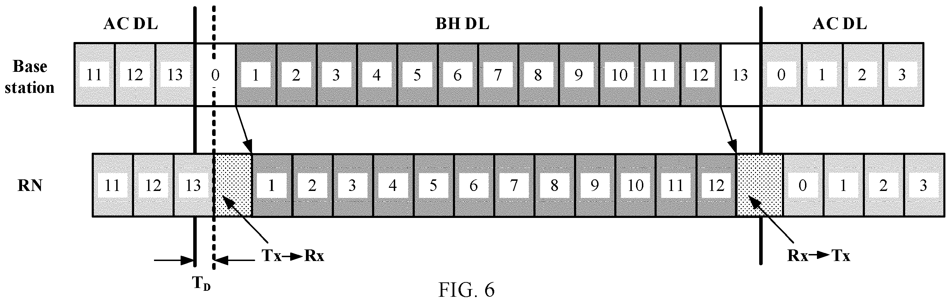

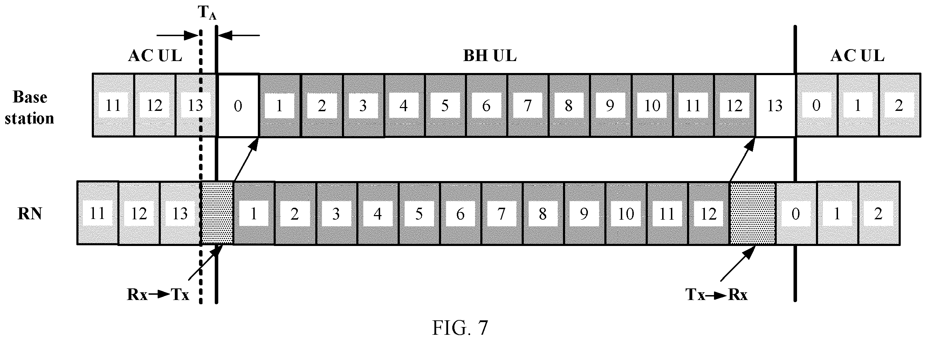

FIG. 6 is a schematic diagram of downlink transmission in which frame structure asynchronization exists between a base station and a relay node. FIG. 7 is a schematic diagram of uplink transmission in which frame structure asynchronization exists between a base station and a relay node. n that has the smallest value and that meets *nT* ≥ *T*_{*Rx*/*Tx*} is a quantity of symbols that need to be reserved. Therefore, a specific quantity of symbols that need to be reserved when frame structure asynchronization exists can be obtained. It is assumed that an obtained value of n is 2, as shown in FIG. 6 and FIG. 7, the first symbol and the last symbol in a slot in which backhaul transmission is performed are reserved for receive/transmit switching of the relay node.

In FIG. 6, AC downlink transmission of the relay node has a fixed delay T_{D} relative to AC downlink transmission of the base station. In FIG. 7, AC uplink transmission of the relay node has a fixed timing advance T_{A} relative to AC uplink transmission of the base station. The fixed delay T_{D} and the fixed timing advance T_{A} may be predefined, and there is no necessary relationship between the T_{D} and a propagation delay of a backhaul link and a quantity of symbols reserved for backhaul transmission and between the T_{A} and a propagation delay of a backhaul link and a quantity of symbols reserved for backhaul transmission. Usually, a value range of the T_{D} and a value range of the T_{A} are controlled, so that minimum quantity n of reserved symbols is not affected. However, if a value of the T_{D} or a value of the T_{A} exceeds a specific range, the quantity of reserved symbols needs to be increased. In other words, minimum n that meets *nT* ≥ *T*_{*Rx*/*Tx*} is not a finally reserved quantity of symbols, and one or more symbols need to be added to the n reserved symbols to obtain the finally reserved quantity of symbols. The added one or more symbols may be usually at a head or a tail of a slot in which backhaul transmission is performed. To be specific, one or more additional symbols are reserved at the head or the tail of the slot in which the backhaul transmission is performed.

In another aspect, during actual implementation, the maximum quantity of available symbols may alternatively be determined by predefining a correspondence between the maximum quantity of available symbols and a subcarrier spacing (or another numerology). The numerology is a parameter used in a communications system. The communications system (for example, 5G) may support a plurality of types of numerologies. The numerology may be defined by using one or more of the following parameter information: the subcarrier spacing, a cyclic prefix (cyclic prefix, CP), a time unit, a bandwidth, and the like. For example, the numerology may be defined by using the subcarrier spacing and the CP. The subcarrier spacing may be 15 kHz, 30 kHz, 60 kHz, 120 kHz, 240 kHz, 480 kHz, or the like. Information about the CP may include a length of the CP and/or a type of the CP. The bandwidth may be a segment of resources that are continuous in frequency domain.

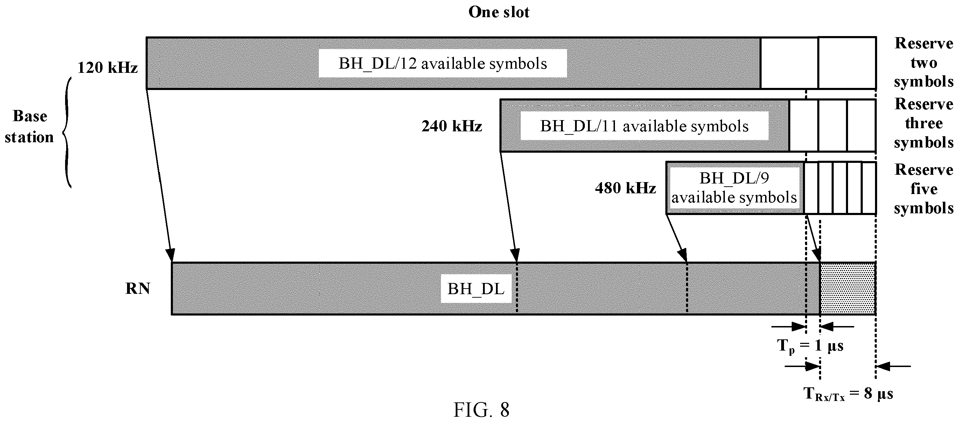

FIG. 8 is a schematic diagram of frame structures in BH downlink transmission at different subcarrier spacings. It is assumed that a quantity of symbols for BH downlink transmission in a slot is 14, a receive/transmit switching time of a relay node is 8 µs, and a propagation delay of the BH downlink transmission is 1 µs. In FIG. 8, three subcarrier spacings are respectively 120 kHz, 240 kHz, and 480 kHz, and symbol lengths corresponding to the three subcarrier spacings are respectively 8.92 µs, 4.46 µs, and 2.23 µs. Using an example in which frame structure synchronization exists, minimum n that meets *nT* - *Tₚ* ≥ *T*_{*Rx*/*Tx*} is 2, 3, and 5. Therefore, quantities of symbols that need to be reserved are 2, 3, and 5. As shown in Table 2, a maximum quantity of available symbols is 12, 11, or 9. When the quantity of symbols for BH downlink transmission in one slot is another quantity, a maximum quantity of available symbols in the slot may be obtained similarly. For example, for a short slot (for example, a mini-slot), a quantity of symbols for BH downlink transmission in the slot may be 7. According to the method provided in this application, a maximum quantity of available symbols may be obtained, as shown in Table 3. For different propagation delays of BH downlink transmission (for example, a change of a propagation delay caused by a handover of a relay node from one base station to another base station), a correspondence between a maximum quantity of available symbols and a subcarrier spacing (or another numerology) may be similarly obtained. Therefore, there are a plurality of groups of correspondences between maximum quantities of available symbols and the subcarrier spacing (or another numerology). When frame structure asynchronization exists, a quantity of reserved symbols or a maximum quantity of available symbols that corresponds to each subcarrier spacing may also be obtained with reference to the method provided above. Details are not described herein again. Similarly, when BH uplink transmission is performed, a quantity of reserved symbols or a maximum quantity of available symbols that corresponds to each subcarrier spacing may also be obtained with reference to the method provided above. Details are not described herein again.

**Table 2 Table of a correspondence between a subcarrier spacing and a maximum quantity of available symbols for backhaul transmission**

| Subcarrier spacing [Hz] | 120 k | 240 k | 480 k |
|---|---|---|---|
| Maximum quantity of available symbols for backhaul transmission | 12 | 11 | 9 |

**Table 3 Table of another correspondence between a subcarrier spacing and a maximum quantity of available symbols for backhaul transmission**

| Subcarrier spacing [Hz] | 120 k | 240 k | 480 k |
|---|---|---|---|
| Maximum quantity of available symbols for backhaul transmission | 5 | 4 | 2 |

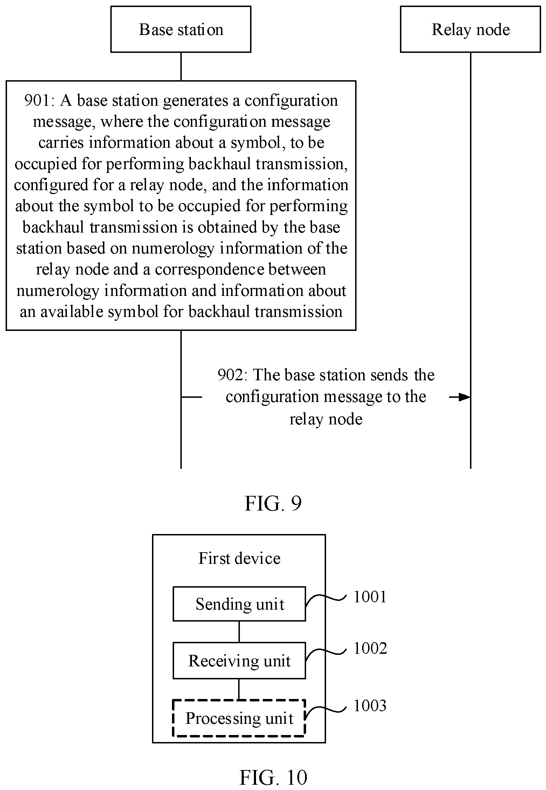

When the correspondence between the maximum quantity of available symbols for backhaul transmission and the subcarrier spacing (or another numerology) is predefined, the base station may directly configure a resource for the relay node. FIG 9 is a schematic diagram of a resource configuration method according to an embodiment of this application. The method includes the following several steps.

Step 901: A base station generates a configuration message, where the configuration message carries information about a symbol, to be occupied for performing backhaul transmission, configured for a relay node, and the information about the symbol to be occupied for performing backhaul transmission is obtained by the base station based on numerology information of the relay node and a correspondence between numerology information and information about an available symbol for backhaul transmission.

The correspondence between the numerology information and the information about the available symbol for backhaul transmission may be shown in a correspondence table between a subcarrier spacing and a quantity of available symbols or a quantity of unavailable symbols for backhaul transmission. For example, in Table 2 and Table 3, the correspondence between the numerology information and the information about the available symbol for backhaul transmission is shown in a correspondence table between a subcarrier spacing and a maximum quantity of available symbols. The subcarrier spacing in Table 2 or Table 3 may be replaced with another piece of numerology information, for example, a cyclic prefix, a time unit, or a bandwidth. The maximum quantity of available symbols for backhaul transmission may alternatively be replaced with another piece of information about the available symbol, for example, a number of the available symbol, a number of an unavailable symbol, a propagation delay of a backhaul link, or a receive/transmit switching time of the relay node.

Step 902: The base station sends the configuration message to the relay node.

The relay node receives the configuration message. The relay node performs backhaul transmission based on the configuration message.

In this embodiment, the base station may implicitly notify, by using the subcarrier spacing based on the correspondence between the maximum quantity of available symbols for backhaul transmission and the subcarrier spacing (or another numerology), the relay node of the maximum quantity of available symbols for backhaul transmission. Specifically, the base station may send configuration information of a subcarrier spacing to the relay node, and the relay node may also obtain a maximum quantity of available symbols of the relay node based on a predefined correspondence table. If the relay node performs backhaul transmission based on symbols that are determined based on the maximum quantity of available symbols by default, the base station no longer needs to configure, for the relay node, a quantity of symbols or a number of a symbol for performing backhaul transmission. When the relay node moves or performs connection switching, the foregoing correspondence needs to be updated. An update method includes: configuring, by the base station, a new correspondence (similar to that in Table 2 and Table 3) for the relay node by using signaling such as RRC signaling, MAC layer CE signaling, or downlink control information (downlink control information, DCI) signaling. For example, the base station notifies, by using RRC signaling, a MAC layer CE, or DCI, the relay node of a specific correspondence that is to be used and that is in the plurality of predefined correspondences. In a possible implementation, there may be a plurality of correspondences between the numerology information and the information about the available symbol for backhaul transmission. For example, there may be a plurality of predefined correspondence tables. The plurality of predefined correspondence tables are mainly related to information such as a propagation delay of a backhaul link. Therefore, the method further includes: receiving, by the base station, information about the backhaul link that is reported by the relay node; and determining, by the base station based on the information about the backhaul link, a correspondence between the numerology information and a maximum quantity of available symbols for backhaul transmission. For example, when the propagation delay of the backhaul link is within a range, the propagation delay corresponds to a predefined correspondence table. Therefore, the predefined correspondence table can be determined based on the propagation delay of the backhaul link.

The resource configuration method provided in this embodiment of this application can adapt to a case in which available backhaul transmission resources change when the relay node performs connection switching, the relay node moves, the relay node uses different subcarrier spacings, or the like. This improves resource utilization of backhaul transmission.

In correspondence to the foregoing method embodiments, in an embodiment of this application, function modules may be obtained through division in a first device and a second device. For example, the function modules may be obtained through division in correspondence to functions, or two or more functions may be integrated into one processing module. The integrated module may be implemented in a form of hardware, or may be implemented in a form of a software function module. It should be noted that, in this embodiment of this application, module division is an example, and is merely a logical function division. During actual implementation, another division manner may be used.

When function modules are obtained through division in correspondence to functions, FIG. 10 is a possible schematic structural diagram of a first device according to an embodiment of this application. The first device includes: a sending unit 1001 and a receiving unit 1002. The sending unit 1001 is configured to support a related step of sending, by the first device, the first message (or information about an available symbol) in the method embodiment. For example, the first device performs step 201 in FIG. 2. The receiving unit 1002 is configured to support a related step of receiving, by the first device, a second message (or a backhaul transmission configuration of the second device). For example, the first device performs step 202 in FIG. 2. Optionally, the first device further includes a processing unit 1003, configured to support related steps of processing, by the first device, information about an available symbol, performing a backhaul transmission configuration, and the like.

During hardware implementation, the processing unit 1003 may be a processor, a processing circuit, or the like. The sending unit 1001 may be a transmitter, a transmitter circuit, or the like. The receiving unit 1002 may be a receiver, a receiver circuit, or the like. The sending unit 1001 and the receiving unit 1002 may form a communications interface.

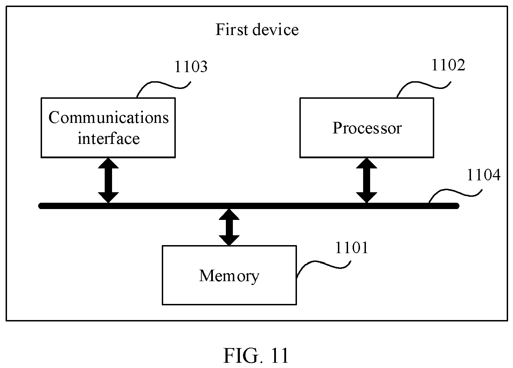

FIG. 11 is a possible schematic diagram of a logical structure of a first device according to an embodiment of this application. The first device includes a communications interface 1103. In this embodiment of this application, the communications interface 1103 is configured to support the first device in performing communication. For example, the communications interface 1103 is configured to support a related step of sending, by the first device, the first message, or support a related step of receiving, by the first device, the second message. Optionally, the first device may further include a memory 1101, a bus 1104, and a processor 1102. The processor 1102 and the memory 1101 may be connected to each other by using the bus 1104. The processor 1102 may be configured to support related steps of processing, by the first device, information about an available symbol, performing a backhaul transmission configuration, and the like. The memory 1101 is configured to store code and data of the first device.

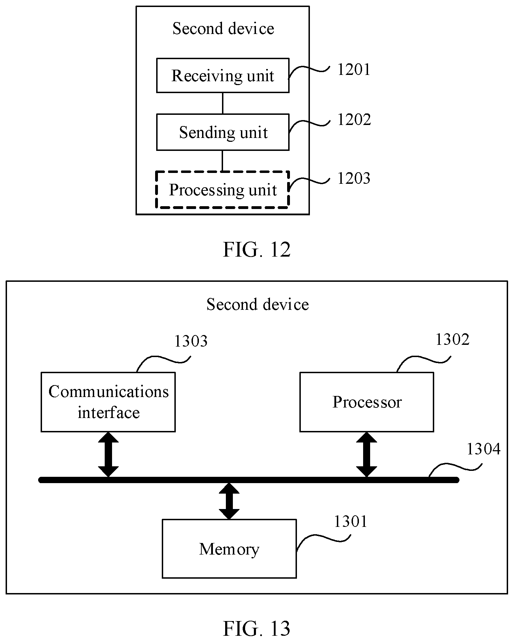

When function modules are obtained through division corresponding to functions, FIG. 12 is a possible schematic structural diagram of a second device according to an embodiment of this application. The second device includes a receiving unit 1201 and a sending unit 1202. The receiving unit 1201 is configured to support a related step of receiving, by the second device, the first message. The sending unit 1202 is configured to support a related step of sending, by the second device, a second message. Optionally, the second device may further include a processing unit 1203. The processing unit 1203 is configured to support related steps of processing, by the second device, information about an available symbol and/or performing a backhaul transmission configuration on the first device.

During hardware implementation, the processing unit 1203 may be a processor, a processing circuit, or the like. The sending unit 1202 may be a transmitter, a transmitter circuit, or the like. The receiving unit 1201 may be a receiver, a receiver circuit, or the like. The sending unit 1202 and the receiving unit 1201 may form a communications interface.

FIG. 13 is a possible schematic diagram of a logical structure of a second device according to an embodiment of this application. The second device includes a communications interface 1303. In this embodiment of this application, the communications interface 1303 is configured to support the second device in performing communication. For example, the communications interface 1303 is configured to support the second device in receiving a first message and/ or sending a second message. Optionally, the second device may further include a memory 1301, a bus 1304, and a processor 1302. The processor 1302 and the memory 1301 are connected to each other by using the bus 1304. The memory 1301 is configured to store program code and data of the second device. The processor 1302 invokes the code stored in the memory 1301 to perform control management. The memory 1301 may be coupled to or not coupled to the processor.

During actual application, the processor 1102 and the processor 1302 may each be a central processing unit, a general purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The communications bus 1104 and the communications bus 1304 may each be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 11 and FIG. 13, but this does not mean that there is only one bus or only one type of bus.

The foregoing mainly describes the solutions provided in the embodiments of this application from a perspective of interaction between the network elements. It may be understood that, to implement the foregoing functions, each network element such as the first device, the second device, or a third device includes a corresponding hardware structure and/or software module for performing each function. A person of ordinary skill in the art should easily be aware that, in combination with the examples described in the embodiments disclosed in this specification, network elements and algorithm steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In another embodiment of this application, a readable storage medium is further provided. The readable storage medium stores a computer executable instruction, and a device (which may be a single-chip microcomputer, a chip, or the like) or a processor may invoke the computer executable instruction stored in the readable storage medium to perform the steps of the first device or the second device in the method provided in FIG. 2, or perform the steps of the relay node or the base station in the method provided in FIG. 9. The foregoing readable storage medium may include: any medium that can store program code, such as a USB flash drive, a removable hard disk, a read-only memory, a random access memory, a magnetic disk, or an optical disc.

In another embodiment of this application, a computer program product is further provided. The computer program product includes a computer executable instruction, and the computer executable instruction is stored in a computer readable storage medium. At least one processor of a device may read the computer executable instruction from the computer readable storage medium, and the at least one processor executes the computer executable instruction, to enable the device to implement the steps of the first device or the second device in the method provided in FIG. 2, or perform the steps of the relay node or the base station in the method provided in FIG. 9.

In another embodiment of this application, a communications system is further provided. The communications system includes a plurality of devices, and the plurality of devices include a first device and a second device. The first device may be the first device provided in FIG. 10 or FIG. 11, and is configured to perform the steps of the first device in the method provided in FIG. 2 or FIG. 9, and/or the second device may be the second device provided in FIG. 12 or FIG. 13, and is configured to perform the steps of the second device in the method provided in FIG. 2 or FIG. 9.

An embodiment of this application further provides a chip for implementing the method described in the foregoing embodiment (for example, FIG. 2 or FIG. 9). The chip includes a processing circuit and a transceiver circuit. The transceiver circuit may be, for example, an input/output interface, a pin, or a circuit. The processing circuit may execute a computer executable instruction stored in a storage unit. The chip may further include a storage unit. The storage unit may be a register, a cache, or the like. Certainly, an additional storage unit may further be provided for the chip. For example, the storage unit may alternatively be a storage unit that is in a terminal or an access device and that is located outside the chip, such as a read-only memory (read-only memory, ROM), another type of static storage device that can store static information and an instruction, or a random access memory (random access memory, RAM). The chip may be applied to a base station or a relay node.

Finally, it should be noted that the foregoing descriptions are merely specific implementations of this application, but the protection scope of this application is not limited thereto. Any variation or replacement within the technical scope disclosed in this application shall fall within the protection scope of this application. Therefore, the protection scope of this application shall be subject to the protection scope of the claims.

In still another aspect of this application, a device is provided. The device includes a processor, and the processor runs code in a memory, to enable the device to perform the foregoing methods. The memory stores data and the code. The memory is located in the device, and the memory is coupled to the processor. The memory may alternatively be located outside the device.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

In conclusion, the foregoing descriptions are merely examples of embodiments of the present invention, but are not intended to limit the protection scope of the present invention. Any modification, equivalent replacement, or improvement made without departing from the spirit and principle of the present invention shall fall within the protection scope of the present invention.

## Claims

1. A resource configuration method, wherein the method comprises:
sending, by a first device, a first message to a second device, wherein the first message carries information about an available symbol for backhaul transmission; and the first device comprises a first relay node, and the second device comprises a base station, or the first device comprises a second relay node, and the second device comprises a third relay node; and
receiving, by the first device, a second message from the second device, wherein the second message is used to indicate information about a symbol to be occupied by the first device to perform backhaul transmission.

2. The method according to claim 1, wherein
the information about the available symbol comprises one or more of the following: a quantity of available symbols, a number of the available symbol, a quantity of unavailable symbols, a number of an unavailable symbol, a propagation delay of a backhaul link, and a receive/transmit switching time of the first device.

3. The method according to claim 2, wherein
the quantity of available symbols is determined based on a symbol time length, the propagation delay of the backhaul link, and the receive/transmit switching time of the first device.

4. The method according to claim 3, wherein
when frame structure synchronization exists between the first device and the second device, the quantity of available symbols is N=m-n, wherein m is a total quantity of symbols in a slot in which backhaul transmission is performed, n is n that meets *nT* - *Tₚ* ≥ *T*_{*Rx*/*Tx*}, and n is less than m, wherein T represents a time length of one symbol, Tₚ represents a propagation delay for backhaul transmission, and *T*_{*Rx*/*Tx*} represents the receive/transmit switching time of the first device.

5. The method according to claim 3, wherein
when frame structure asynchronization exists between the first device and the second device, the quantity of available symbols is N=m-n, wherein m is a total quantity of symbols in a slot in which backhaul transmission is performed, n is n that meets *nT* ≥ *T*_{*Rx*/*Tx*}, and n is less than m, wherein T represents a time length of one symbol, and *T*_{*Rx*/*Tx*} represents the receive/transmit switching time of the first device.

6. A resource configuration method, wherein the method comprises:
receiving, by a second device, a first message from a first device, wherein the first message carries information about an available symbol for backhaul transmission; and
sending, by the second device, a second message to the first device, wherein the second message is used to indicate information about a symbol to be occupied by the first device to perform backhaul transmission.

7. The method according to claim 6, wherein
the information about the available symbol comprises one or more of the following: a quantity of available symbols, a number of the available symbol, a quantity of unavailable symbols, a number of an unavailable symbol, a propagation delay of a backhaul link, and a receive/transmit switching time of the first device.

8. The method according to claim 7, wherein
the quantity of available symbols is determined based on a symbol time length, the propagation delay of the backhaul link, and the receive/transmit switching time of the first device.

9. The method according to claim 8, wherein
when frame structure synchronization exists between the first device and the second device, the quantity of available symbols is N=m-n, wherein m is a total quantity of symbols in a slot in which backhaul transmission is performed, n is n that meets *nT* - *Tₚ* ≥ *T*_{*Rx*/*Tx*}, and n is less than m, wherein T represents a time length of one symbol, Tₚ represents a propagation delay for backhaul transmission, and *T*_{*Rx*/*Tx*} represents the receive/transmit switching time of the first device.

10. The method according to claim 8, wherein
when frame structure asynchronization exists between the first device and the second device, the quantity of available symbols is N=m-n, wherein m is a total quantity of symbols in a slot in which backhaul transmission is performed, n is n that meets *nT* ≥ *T*_{*Rx*/*Tx*}, and n is less than m, wherein T represents a time length of one symbol, Tₚ represents a propagation delay for backhaul transmission, and *T*_{*Rx*/*Tx*} represents the receive/transmit switching time of the first device.

11. A first device for configuring a resource, wherein the first device comprises:
a sending unit, configured to send a first message to a second device, wherein the first message carries information about an available symbol for backhaul transmission; and the first device comprises a first relay node, and the second device comprises a base station, or the first device comprises a second relay node, and the second device comprises a third relay node; and
a receiving unit, configured to receive a second message from the second device, wherein the second message is used to indicate information about a symbol to be occupied by the first device to perform backhaul transmission.

12. The first device according to claim 11, wherein
the information about the available symbol comprises one or more of the following: a quantity of available symbols, a number of the available symbol, a quantity of unavailable symbols, a number of an unavailable symbol, a propagation delay of a backhaul link, and a receive/transmit switching time of the first device.

13. The first device according to claim 12, wherein
the quantity of available symbols is determined based on a symbol time length, the propagation delay of the backhaul link, and the receive/transmit switching time of the first device.

14. The first device according to claim 13, wherein
when frame structure synchronization exists between the first device and the second device, the quantity of available symbols is N=m-n, wherein m is a total quantity of symbols in a slot in which backhaul transmission is performed, n is n that meets *nT* - *Tₚ* ≥ *T*_{*Rx*/*Tx*}, and n is less than m, wherein T represents a time length of one symbol, Tₚ represents a propagation delay for backhaul transmission, and *T*_{*Rx*/*Tx*} represents the receive/transmit switching time of the first device.

15. The first device according to claim 13, wherein
when frame structure asynchronization exists between the first device and the second device, the quantity of available symbols is N=m-n, wherein m is a total quantity of symbols in a slot in which backhaul transmission is performed, n is n that meets *nT* ≥ *T*_{*Rx*/*Tx*}, and n is less than m, wherein T represents a time length of one symbol, and *T*_{*Rx*/*Tx*} represents the receive/transmit switching time of the first device.

16. A second device for configuring a resource, wherein the second device comprises:
a receiving unit, configured to receive a first message from a first device, wherein the first message carries information about an available symbol for backhaul transmission; and
a sending unit, configured to send a second message to the first device, wherein the second message is used to indicate information about a symbol to be occupied by the first device to perform backhaul transmission.

17. The second device according to claim 16, wherein
the information about the available symbol comprises one or more of the following: a quantity of available symbols, a number of the available symbol, a quantity of unavailable symbols, a number of an unavailable symbol, a propagation delay of a backhaul link, and a receive/transmit switching time of the first device.

18. The second device according to claim 17, wherein
the quantity of available symbols is determined based on a symbol time length, the propagation delay of the backhaul link, and the receive/transmit switching time of the first device.

19. The second device according to claim 18, wherein
when frame structure synchronization exists between the first device and the second device, the quantity of available symbols is N=m-n, wherein m is a total quantity of symbols in a slot in which backhaul transmission is performed, n is n that meets *nT* - *Tₚ* ≥ *T*_{*Rx*/*Tx*}, and n is less than m, wherein T represents a time length of one symbol, Tₚ represents a propagation delay for backhaul transmission, and *T*_{*Rx*/*Tx*} represents the receive/transmit switching time of the first device.

20. The second device according to claim 18, wherein
when frame structure asynchronization exists between the first device and the second device, the quantity of available symbols is N=m-n, wherein m is a total quantity of symbols in a slot in which backhaul transmission is performed, n is n that meets *nT* ≥ *T*_{*Rx*/*Tx*}, and n is less than m, wherein T represents a time length of one symbol, Tₚ represents a propagation delay for backhaul transmission, and *T*_{*Rx*/*Tx*} represents the receive/transmit switching time of the first device.

21. A resource configuration method, wherein the method comprises:
generating, by a second device, a configuration message, wherein the configuration message carries information about a symbol, to be occupied for performing backhaul transmission, configured for a first device, and the information about the symbol to be occupied for performing backhaul transmission is obtained by the second device based on numerology information of the first device and a correspondence between numerology information and information about an available symbol for backhaul transmission; and
sending, by the second device, the configuration message to the first device.

22. A resource configuration method, wherein the method comprises:
receiving, by a first device, a configuration message from a second device, wherein the configuration message carries information about a symbol, to be occupied for performing backhaul transmission, configured for a first device, and the information about the symbol to be occupied for performing backhaul transmission is obtained by the second device based on numerology information of the first device and a correspondence between numerology information and information about an available symbol for backhaul transmission; and
performing, by the first device, backhaul transmission based on the configuration message.

23. A first device, wherein the first device comprises:
a receiving unit, configured to receive a configuration message from a second device, wherein the configuration message carries information about a symbol, to be occupied for performing backhaul transmission, configured for the first device, and the information about the symbol to be occupied for performing backhaul transmission is obtained by the second device based on numerology information of the first device and a correspondence between numerology information and information about an available symbol for backhaul transmission; and
a processing unit, configured to perform backhaul transmission based on the configuration message.

24. A second device, wherein the second device comprises:
a processing unit, configured to generate a configuration message, wherein the configuration message carries information about a symbol, to be occupied for performing backhaul transmission, configured for a first device, and the information about the symbol to be occupied for performing backhaul transmission is obtained by the second device based on numerology information of the first device and a correspondence between numerology information and information about an available symbol for backhaul transmission; and
a sending unit, configured to send the configuration message to the first device.

25. A device, wherein the device comprises a transceiver and a processor, wherein
the processor runs code in a memory, to enable the device to perform the method according to any one of claims 1 to 10, claim 21, and claim 22.

26. A readable storage medium, wherein the readable storage medium stores an instruction; and
when the instruction stored in the readable storage medium is run on a device, the device is enabled to perform the method according to any one of claims 1 to 10, claim 21, and claim 22.

27. A computer program product, wherein
when the computer program product runs on a computer, the computer is enabled to perform the method according to any one of claims 1 to 10, claim 21, and claim 22.

28. A chip, wherein the chip comprises a communications interface and a processor, wherein
the communications interface is used for message receiving and/or sending, and the processor runs code in a memory, to enable the chip to perform the method according to any one of claims 1 to 10, claim 21, and claim 22.
